# EUROPEAN PATENT APPLICATION

(11) **EP 4 428 962 A1**
(43) Date of publication of application: **11.09.2024**
(21) Application number: 23795068.8
(22) Date of filing: 14.04.2023
(51) Int. Cl.: H01M 8/04664, H01M 8/0438

(54) **FUEL CELL VEHICLE, AND HYDROGEN DISCHARGE VALVE/DRAIN VALVE FAULT DIAGNOSIS METHOD AND APPARATUS**

(30) Priority: 29.04.2022 CN 202210474101
(71) Applicant: Yutong Bus Co., Ltd., Zhengzhou, Henan 450061 (CN)
(72) Inventor: YU, Yangyang, Zhengzhou, Henan 450061 (CN); MENG, Deshui, Zhengzhou, Henan 450061 (CN); ZHANG, Longhai, Zhengzhou, Henan 450061 (CN); JIANG, Shangfeng, Zhengzhou, Henan 450061 (CN); CHEN, Guoqian, Zhengzhou, Henan 450061 (CN); ZHAO, Yaxin, Zhengzhou, Henan 450061 (CN)
(74) Representative: Gulde & Partner
(86) International application number: PCT/CN2023/088445
(87) International publication number: WO 2023/207635

(57) **Abstract**

The present invention belongs to the field of fuel cell technologies, and specifically relates to a fuel cell vehicle, and a hydrogen discharge valve/drain valve fault diagnosis method and apparatus. The method of the present invention includes a diagnostic method for a fault in which the valve cannot be opened and a diagnostic method for a fault in which the valve cannot be closed. A valve is a hydrogen discharge valve or a drain valve. According to the method, a hydrogen gas inlet pressure is detected to determine whether a fault in which the hydrogen discharge valve or the drain valve cannot be opened occurs, and a duty cycle of a pressure control apparatus is detected to determine whether a fault in which the hydrogen discharge valve or the drain valve cannot be closed occurs, which effectively resolves a problem that a determination cannot be made as to whether a valve without an opening/closing feedback state is faulty. In addition, fitting is performed on the obtained data by using the method, and fault diagnosis is performed on the hydrogen discharge valve and the drain valve based on an overall variation trend, which is more effective and reliable for fault identification, improves accuracy of the fault diagnosis, and avoids frequent on and off of a fuel cell system caused by erroneous determination.

## Description

### TECHNICAL FIELD

The present invention belongs to the field of fuel cell technologies, and specifically relates to a fuel cell vehicle, and a hydrogen discharge valve/drain valve fault diagnosis method and apparatus.

### BACKGROUND

Hydrogen fuel cell vehicles are new energy vehicles with broad development and application prospects, and have numerous advantages such as a short hydrogenation time and a long mile range. In particular, proton exchange membrane fuel cells are widely applied in the field of hydrogen fuel cell vehicles due to their advantages such as cleanliness and high energy efficiency.

A hydrogen discharge valve and a drain valve are arranged in a fuel cell system, and are configured to periodically discharge nitrogen in hydrogen gas and liquid water collected in a steam-water separator. The hydrogen discharge valve and the drain valve are mostly solenoid valves and have no signal feedback. Therefore, the hydrogen discharge valve and the drain valve cannot be effectively identified if a fault occurs during system operation, which leads to reduction of a hydrogen utilization rate, an increase in a hydrogen exhaust emission concentration, and the like.

A Chinese invention patent application with the Publication No. CN112054230A discloses a fault diagnosis method and system for a hydrogen fuel cell drainage and exhaust apparatus. According to the method, a MAP graph of flow rates under different conditions such as inlet pressure, outlet pressure, and temperatures at different hydrogen gas injector duty cycles is constructed through calibration, and then a standard hydrogen gas injector outlet flow rate is obtained based on the hydrogen gas injector duty cycle during actual operation. Compared with a theoretical consumption calculated through the operating current of the fuel cell, if the standard hydrogen gas injector outlet flow rate is greater than the theoretical consumption, a state of the hydrogen discharge valve is normal; otherwise, a state of the hydrogen discharge valve is abnormal. The invention patent application actually focuses more on determination of water content of the fuel cell system, rather than determination of a fault of the hydrogen discharge valve. When the hydrogen discharge valve fails to be opened, flow rates of the fuel cell system and the hydrogen discharge valve should be basically the same. When the hydrogen discharge valve fails to be closed, the standard hydrogen gas injector outlet flow rate should be much higher than the theoretical consumption. In addition, operation of the fuel cell system is complicated and a large number of influencing factors exist. For one thing, the construction of the MAP through calibration requires a lot of work. For another, real-time analysis by using the method causes a large quantity of erroneous determination, which may cause frequent faults and shutdown of the system and is not conducive to stable operation of the system.

### SUMMARY

The present invention is intended to provide a fuel cell vehicle, and a hydrogen discharge valve/drain valve fault diagnosis method and apparatus, so as to resolve a problem of a high misjudgment rate of fault diagnosis of a hydrogen discharge valve/drain valve in the prior art.

To resolve the foregoing technical problem, the technical solution provided in the present invention and the beneficial effect corresponding to the technical solution are as follows.

The present invention provides a hydrogen discharge valve/drain valve fault diagnosis method, including a diagnostic method for a fault in which the valve cannot be opened and/or a diagnostic method for a fault in which the valve cannot be closed, where the valve is a hydrogen discharge valve or a drain valve; and
the diagnostic method for a fault in which the valve cannot be opened includes the following steps:
   1a) obtaining maximum hydrogen gas inlet pressure value data generated when an operating current of a fuel cell is a fault determination current and a valve control state is controlled open within a period of time in which a check needs to be performed, where the maximum hydrogen gas inlet pressure value data includes a maximum hydrogen gas inlet pressure value in a process of controlling the valve to open each time;
   1b) performing curve fitting on all of the obtained maximum hydrogen gas inlet pressure values in chronological order, to obtain a pressure fitting curve corresponding to the valve; and
   1c) determining that the fault in which the valve cannot be opened occurs if pressure fitting values within a period of time in the pressure fitting curve are continuously greater than a normal pressure value corresponding to the valve by a set pressure threshold; and
the diagnostic method for a fault in which the valve cannot be closed includes the following steps:
   2a) obtaining duty cycle data of a pressure control apparatus and discrete value data of a hydrogen gas inlet pressure generated when the operating current of the fuel cell is the fault determination current and the valve control state is controlled closed within the period of time in which a check needs to be performed, where the duty cycle data includes a duty cycle in a process of controlling the valve to close each time, and the discrete value data of the hydrogen gas inlet pressure includes a discrete value of the hydrogen gas inlet pressure in the process of controlling the valve to close each time;
   2b) excluding data whose value deviation between a hydrogen gas inlet pressure value and a corresponding set pressure value is greater than a set deviation value, and performing curve fitting on all duty cycles of the remaining data in the chronological order, to obtain a duty cycle fitting curve corresponding to the valve; and
   2c) determining that the fault in which the valve cannot be closed occurs if duty cycle fitting values within a period of time in the duty cycle fitting curve are continuously greater than a normal value of the duty cycle by a set duty cycle threshold.

The beneficial effects of the foregoing technical solution are as follows. Changes of a fuel cell system when the valve cannot be opened and cannot be closed are analyzed in the present invention. It is found that the hydrogen gas inlet pressure increases when a fault in which the hydrogen discharge valve or the drain valve cannot be opened occurs, and a duty cycle of a pressure control apparatus increases when the hydrogen discharge valve or the drain valve fails to be closed. Based on these findings, according to the method, the hydrogen gas inlet pressure is detected to determine whether a fault in which the hydrogen discharge valve or the drain valve cannot be opened occurs, and the duty cycle of the pressure control apparatus is detected to determine whether a fault in which the hydrogen discharge valve or the drain valve cannot be closed occurs, which effectively resolves a problem that a determination cannot be made as to whether a valve without an opening/closing feedback state is faulty. In addition, based on a high misjudgment rate of instantaneous data, fitting needs to be performed on the obtained data by using the method, and fault diagnosis is performed on the hydrogen discharge valve and the drain valve based on an overall variation trend, which is more effective and reliable for fault identification, improves accuracy of diagnosis of faults in which the hydrogen discharge valve and the drain valve cannot be opened and closed, and avoids affecting customer experience due to frequent on and off of the fuel cell system caused by erroneous determination.

As a further improvement of the method, in step 1c), the normal pressure value is obtained by using the following method: obtaining the pressure fitting values within a set initial period of time in the pressure fitting curve, and determining the normal pressure value based on the pressure fitting values within the set initial period of time.

Beneficial effects of the foregoing technical solution are as follows. Since the valve is generally normal and faultless at an initial moment, a fault in which the valve cannot be opened is diagnosed directly by using the pressure fitting values within the initial period of time as the normal pressure value, which is simple but highly accurate.

As a further improvement of the method, in step 2c), the normal value of the duty cycle is obtained by using the following method: obtaining duty cycle fitting values within a set initial period of time in the duty cycle fitting curve, and determining the normal value of the duty cycle based on the duty cycle fitting values within the set initial period of time.

Beneficial effects of the foregoing technical solution are as follows. Since the valve is generally normal and faultless at an initial moment, the fault in which the valve cannot be closed is diagnosed directly by using the duty cycle fitting values within the initial period of time as the normal value of the duty cycle, which is simple but highly accurate.

As a further improvement of the method, the set pressure threshold and the set duty cycle threshold are respectively obtained by using the following method:
constructing a faulty environment that simulates the fault in which the valve cannot be opened and a normal environment in which the hydrogen discharge valve/drain valve normally operates, placing a fuel cell system to operate in the faulty environment and the normal environment respectively, obtaining the maximum hydrogen gas inlet pressure value data respectively from the two environments when the operating current of the fuel cell is the fault determination current, respectively performing, in chronological order, numerical fitting on all of the maximum hydrogen gas inlet pressure values obtained from the two environments, and using a difference between numerical values generated through fitting in the two environments as the set pressure threshold; and
constructing a faulty environment that simulates the fault in which the valve cannot be closed and a normal environment in which the valve normally operates, placing a fuel cell system to operate in the faulty environment and the normal environment respectively, obtaining the duty cycle data of the pressure control apparatus respectively from the two environments when the operating current of the fuel cell is the fault determination current, respectively performing, in the chronological order, numerical fitting on all of the duty cycles obtained from the two environments, and using the difference between numerical values generated through fitting in the two environments as the set duty cycle threshold.

Beneficial effects of the foregoing technical solution are as follows. A real situation may be accurately obtained by using a laboratory simulation method, to obtain an appropriate set pressure threshold and an appropriate set duty cycle threshold.

As a further improvement of the method, the set pressure threshold and the set duty cycle threshold are respectively obtained by using the following method:
obtaining the maximum hydrogen gas inlet pressure value data under a condition that the fault in which the valve cannot be opened occurs and a condition that the valve is normal when the operating current of the fuel cell is the fault determination current in a historical operation process, performing, in the chronological order, numerical fitting on all of the maximum hydrogen gas inlet pressure values obtained in the two conditions, and using a difference between numerical values generated through fitting in the two conditions as the set pressure threshold; and
obtaining the duty cycle data of the pressure control apparatus under a condition that the fault in which the valve cannot be closed occurs and a condition that the valve is normal when the operating current of the fuel cell is the fault determination current in a historical operation process, performing, in the chronological order, numerical fitting on all of the duty cycles obtained in the two conditions , and using a difference between numerical values generated through fitting in the two conditions as the set duty cycle threshold.

Beneficial effects of the foregoing technical solution are as follows. An appropriate set pressure threshold and an appropriate set duty cycle threshold may be obtained by using historical data.

As a further improvement of the method, the fault determination current is obtained by using the following method: calculating a frequency distribution of all of the operating currents of the fuel cell, and obtaining, as the fault determination current, the operating current having a maximum frequency.

Beneficial effects of the foregoing technical solution are as follows. The fault diagnosis of the valve may be effectively implemented by directly selecting the operating current having a maximum frequency as the fault determination current.

As a further improvement of the method, a fuel cell system is controlled to shut down when it is determined that the fault in which the valve cannot be opened or the fault in which the valve cannot be closed occurs.

Beneficial effects of the foregoing technical solution are as follows. The fuel cell may be protected by controlling the fuel cell system to shut down.

A hydrogen discharge valve/drain valve fault diagnosis apparatus of the present invention includes a memory and a processor. The processor is configured to execute instructions stored in the memory to implement the hydrogen discharge valve/drain valve fault diagnosis method described above, and achieve the same beneficial effects as the method.

A fuel cell vehicle of the present invention includes a hydrogen fuel cell system. The hydrogen fuel cell system includes a hydrogen fuel cell, a pressure sensor for detecting a hydrogen gas inlet pressure, and a pressure control apparatus, where the pressure control apparatus is configured to maintain a constant pressure in a hydrogen storage chamber by changing a duty cycle, and further includes a memory and a processor, where the processor is configured to execute instructions stored in the memory to implement the hydrogen discharge valve/drain valve fault diagnosis method described above, and achieve the same beneficial effects as the method.

### BRIEF DESCRIPTION OF THE DRAWINGS

FIG. 1 is a schematic diagram of a principle of fault diagnosis of a hydrogen discharge valve/drain valve according to the present invention.
FIG. 2 is a diagram of a data fitting performance phenomenon according to the present invention.
FIG. 3 is a flowchart of a method for determining a fault threshold according to the present invention.
FIG. 4 is a flowchart of a hydrogen discharge valve/drain valve fault diagnosis method according to the present invention.
FIG. 5 is a structural diagram of a hydrogen discharge valve/drain valve fault diagnosis apparatus according to the present invention.

### DETAILED DESCRIPTION

Under a condition that a fuel cell system in a fuel cell vehicle normally operates, a hydrogen discharge valve and a drain valve are periodically opened and closed at a specific frequency, to discharge nitrogen in hydrogen gas and liquid water in a water separator. Hydrogen gas is stored in a sealed chamber. The chamber is provided with three ports: a front end port and two rear end ports. One rear end port is configured to output hydrogen gas from the chamber for a chemical reaction (a flow rate is fixed under a same current). The other rear end port is configured to discharge nitrogen and water at a time interval. Under the control of a pressure control apparatus, hydrogen gas is injected into the chamber through the front end port to keep the pressure in the chamber constant. The pressure control apparatus generally includes a proportional valve. An opening degree of the proportional valve is changed by giving different duty cycles. A larger given duty cycle leads to a larger opening degree of the proportional valve. When the front end port is in an open state, to maintain stability of the pressure in the chamber, the pressure control apparatus generally uses feedforward regulation. To be specific, when it is found that the rear end port is in the open state, the duty cycle controlled by the pressure control apparatus is immediately increased to maintain the pressure in the chamber constant. When the pressure control apparatus is in a steady state, the pressure control apparatus generally uses feedback regulation (for example, PI regulation). To be specific, after the rear end port is changed, the front end is adjusted by using the pressure control apparatus based on the change of the rear end port.

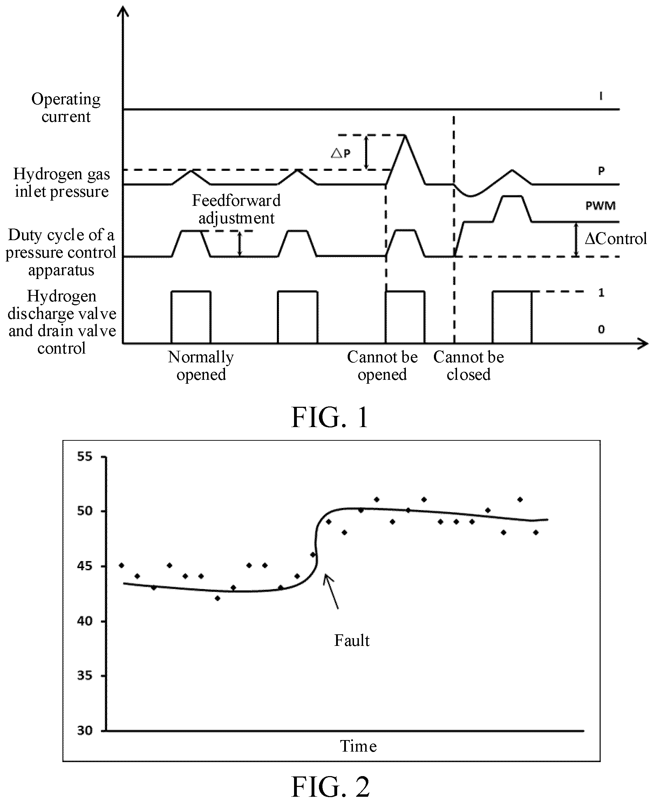

When the hydrogen discharge valve and the drain valve normally operate, a part of hydrogen gas is intermittently discharged. To maintain pressure stability, the feedforward regulation is generally used for hydrogen pressure control. The use of the feedforward regulation inevitably increases the duty cycle of the pressure control apparatus, and the hydrogen pressure and the duty cycle change intermittently. When the valve (the valve is the hydrogen discharge valve or the drain valve) is controlled to open, hydrogen gas enters the chamber at the front end port to maintain pressure in the chamber constant. If the valve fails to be opened as a result of a valve fault, the valve that should have been changed to the open state is still in a closed state. In other words, no hydrogen gas is discharged at the rear end port, but more hydrogen gas enters the front end port, a hydrogen gas inlet pressure increases to some extent compared with a normal state. When the valve is closed, if the valve fails to be closed as a result of the valve fault, the valve that should have been changed to the closed state is still in the open state. In other words, a large amount of hydrogen is directly discharged from a tailpipe under this condition. To maintain the hydrogen gas inlet pressure, the pressure control apparatus is bound to increase the duty cycle accordingly to maintain the pressure in the chamber constant. The whole principle is shown in FIG. 1.

Based on FIG. 1 and the principle described above, fault diagnosis of the hydrogen discharge valve and the drain valve is implemented by analyzing the duty cycle of the pressure control apparatus and the change of the hydrogen gas inlet pressure through a big data platform in the present invention, so that a hydrogen discharge valve/drain valve fault diagnosis method, a hydrogen discharge valve/drain valve fault diagnosis apparatus, and a fuel cell vehicle of the present invention are implemented. The present invention is described in detail below with reference to the accompanying drawings and embodiments.

### Method embodiment:

Since a duty cycle of a pressure control apparatus and a hydrogen gas inlet pressure are not constant during actual operation, and fluctuations exist, erroneous determination may be caused if an instantaneous change value collected and monitored is directly used for fault diagnosis. Therefore, the present invention organizes, screens, and analyzes differences of operation data of a fuel cell, to fit a changing trend of the operation data through big data screening. Fault diagnosis is performed on a hydrogen discharge valve and a drain valve by using the changing trend data, and then fault confirmation and faulty part replacement are performed through after-sales service, to ensure safe and reliable operation of a fuel cell system.

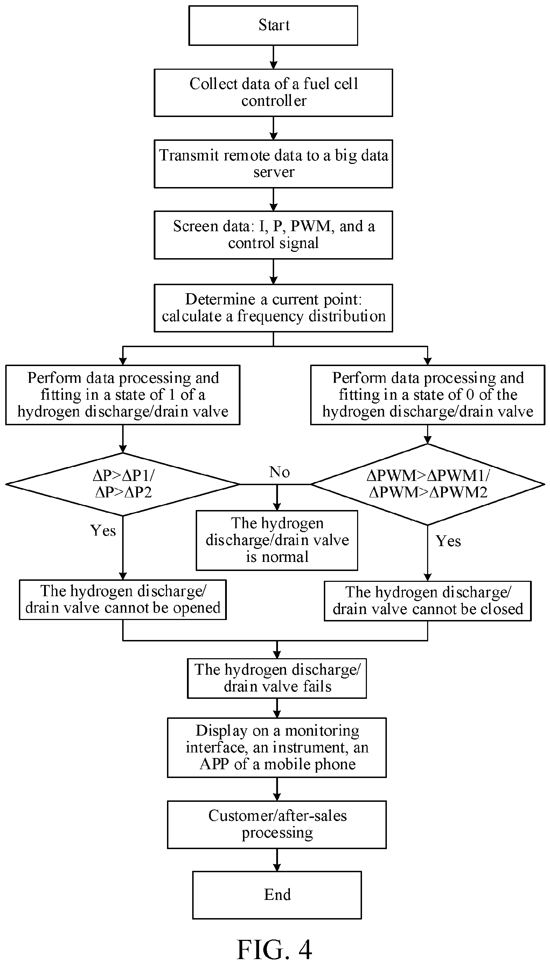

An embodiment of a hydrogen discharge valve/drain valve fault diagnosis method is provided. This embodiment is implemented in a fuel cell controller. To be specific, the fuel cell controller performs data processing, analysis, and determination based on the collected data to determine a fault type of the hydrogen discharge valve/drain valve. As shown in FIG. 4, implementation steps of the whole method are as follows.

Step I: Obtain operation data of a fuel cell system through a vehicle-end remote monitoring T-box and save the data on a big data platform (a server, having functions including data storage and data processing and calculation), and obtain an operating current I, a hydrogen gas inlet pressure P, a duty cycle signal PWM of a pressure control apparatus, and control signals of a hydrogen discharge valve and a drain valve of a fuel cell.

Step II: Considering accuracy of a fault determination model and that more script data leads to higher accuracy, calculate a frequency distribution of the operating current of the fuel cell system, and select a current point with a largest frequency as a fault determination current point I specifically by using a magnitude of the operating current as an abscissa and using a frequency of the operating current (that is, a number of occurrences) as an ordinate.

Step III: Perform fault determination on the hydrogen discharge valve:
1. A fault in which the hydrogen discharge valve cannot be opened.
   1) Screen maximum hydrogen gas inlet pressure value data under a condition that the operating current of the fuel cell is the fault current point I and a control state of the hydrogen discharge valve is 1 (that is, the control state of the hydrogen discharge valve is to control the hydrogen discharge valve to open) within a period of time in which a check needs to be performed. The maximum hydrogen gas inlet pressure value data herein is a maximum hydrogen gas inlet pressure value in a process of controlling the hydrogen discharge valve to open each time. In other words, a control state of 1 of the hydrogen discharge valve each time corresponds to a maximum hydrogen gas inlet pressure value.
   2) Perform curve fitting on the screened maximum hydrogen gas inlet pressure value in chronological order, to obtain a pressure fitting curve corresponding to the hydrogen discharge valve, as shown in FIG. 2.
   3) Calculate an average (the average is taken herein because the pressure fitting curve within the initial period of time may not be a horizontal line) of pressure fitting values within an initial period of time of the pressure fitting curve and use the average as a normal pressure value, and determine that the fault in which the hydrogen discharge valve cannot be opened occurs when the pressure fitting values within a period of time in the pressure fitting curve are continuously greater than the normal pressure value by a set pressure threshold △P1. It is to be noted that the average of the pressure fitting values within the initial period of time is directly used as the normal pressure value herein because the hydrogen discharge valve is generally normal within the initial period of time, and a fault occurs after a period of time.
2. A fault in which the hydrogen discharge valve cannot be closed.
   1) Screen duty cycle data and discrete value data of the hydrogen gas inlet pressure of the pressure control apparatus under a condition that the operating current of the fuel cell is the fault current point I and the control state of the hydrogen discharge valve is 0 (that is, the control state of the hydrogen discharge valve is to control the hydrogen discharge valve to close) within a period of time in which a check needs to be performed, where the duty cycle data herein is a duty cycle in a process of controlling the hydrogen discharge valve to close each time, the discrete value data of the hydrogen gas inlet pressure is a discrete value of the hydrogen gas inlet pressure in the process of controlling the hydrogen discharge valve to close each time. Since the hydrogen discharge valve is in a closed state for a continuous period of time, and the duty cycle and the hydrogen gas inlet pressure collected during the continuous period of time include not only one value but a series of discrete values, the duty cycle and the discrete value of the hydrogen gas inlet pressure herein are both a series of discrete values.
   2) Exclude a point with a large deviation between a hydrogen gas inlet pressure value and a target pressure value (determined based on system control accuracy, generally +3-4 Kpa), and then perform curve fitting on all duty cycles of the remaining data points in the chronological order, to obtain a duty cycle fitting curve corresponding to the hydrogen discharge valve.
   3) Calculate an average (the average is taken herein because the duty cycle fitting curve within the initial period of time may not be a horizontal line) of duty cycle fitting values within an initial period of time of the duty cycle fitting curve and use the average as a normal value of the duty cycle, and determine that the fault in which the hydrogen discharge valve cannot be closed occurs when the duty cycle fitting values within a period of time in the duty cycle fitting curve are continuously greater than the normal value of the duty cycle by a set duty cycle threshold △PWM1. It is to be noted that the average of the duty cycle fitting values within the initial period of time is directly used as the normal value of the duty cycle herein because the hydrogen discharge valve is generally normal within the initial period of time, and a fault occurs after a period of time.

Step IV: Perform fault determination on the drain valve:
1. A fault in which the drain valve cannot be opened.
   1) Screen maximum hydrogen gas inlet pressure value data under a condition that the operating current of the fuel cell is the fault current point I and a control state of the drain valve is 1 (that is, the control state of the drain valve is to control the drain valve to open) within a period of time in which a check needs to be performed. The maximum hydrogen gas inlet pressure value data herein is a maximum hydrogen gas inlet pressure value in a process of controlling the drain valve to open each time. In other words, a control state of 1 of the drain valve each time corresponds to a maximum hydrogen gas inlet pressure value.
   2) Perform curve fitting on the screened maximum hydrogen gas inlet pressure value in chronological order, to obtain a pressure fitting curve corresponding to the drain valve.
   3) Calculate an average (the average is taken herein because the pressure fitting curve within the initial period of time may not be a horizontal line) of pressure fitting values within an initial period of time of the pressure fitting curve and use the average as a normal pressure value, and determine that the fault in which the drain valve cannot be opened occurs when the pressure fitting values within a period of time in the pressure fitting curve are continuously greater than the normal pressure value by a set pressure threshold △P2. It is to be noted that the average of the pressure fitting values within the initial period of time is directly used as the normal pressure value herein because the drain valve is generally normal within the initial period of time, and a fault occurs after a period of time.
2. A fault in which the drain valve cannot be closed.
   1) Screen duty cycle data and discrete value data of the hydrogen gas inlet pressure of the pressure control apparatus under a condition that the operating current of the fuel cell is the fault current point I and the control state of the drain valve is 0 (that is, the control state of the drain valve is to control the drain valve to close) within a period of time in which a check needs to be performed, where the duty cycle data herein is a duty cycle in a process of controlling the drain valve to close each time, the discrete value data of the hydrogen gas inlet pressure is a discrete value of the hydrogen gas inlet pressure in the process of controlling the drain valve to close each time. Since the drain valve is in a closed state for a continuous period of time, and the duty cycle and the hydrogen gas inlet pressure collected during the continuous period of time include not only one value but a series of discrete values, the duty cycle and the discrete value of the hydrogen gas inlet pressure herein are both a series of discrete values.
   2) Exclude a point with a large deviation between a hydrogen gas inlet pressure value and a target pressure value (determined based on system control accuracy, generally +3-4 Kpa), and then perform curve fitting on all duty cycles of the remaining data points in the chronological order, to obtain a duty cycle fitting curve corresponding to the drain valve.
   3) Calculate an average (the average is taken herein because the duty cycle fitting curve within the initial period of time may not be a horizontal line) of duty cycle fitting values within an initial period of time of the duty cycle fitting curve and use the average as a normal value of the duty cycle, and determine that the fault in which the drain valve cannot be closed occurs when the duty cycle fitting values within a period of time in the duty cycle fitting curve are continuously greater than the normal value of the duty cycle by a set duty cycle threshold △PWM2. It is to be noted that the average of the duty cycle fitting values within the initial period of time is directly used as the normal value of the duty cycle herein because the drain valve is generally normal within the initial period of time, and a fault occurs after a period of time.

Step V: Transmit fault information to a driver through an instrument or immediately control the fuel cell system to stop and transmit the fault information to an after-sales technician through an APP of a mobile phone for fault confirmation after the determination is completed.

If it is determined that a fault in which the valve cannot be opened or a fault in which the valve cannot be closed occurs, the first thing that the after-sales technician needs to confirm is whether a problem occurs during power supply of the valve. Under this condition, only a 24V power supply apparatus is needed to supply power to the valve. If the valve can normally operate under a condition that the 24V power supply apparatus is used to supply power to the valve, it indicates that a problem occurs during the power supply of the valve, and the power supply thereof needs to be checked. If the valve still cannot normally operate, it indicates that no problem occurs during the power supply of the valve, and the after-sales technician needs to detect the valve. If the valve can be normally opened and closed, a sound of action of a solenoid valve should exist at a moment the valve is normally opened or closed. Based on this, the after-sales technician may transmit a control signal to the valve to control the valve to be closed or opened. Under this condition, if the sound of action of the solenoid valve cannot be heard, it is confirmed that the valve is faulty. Under this condition, the valve may be replaced optionally.

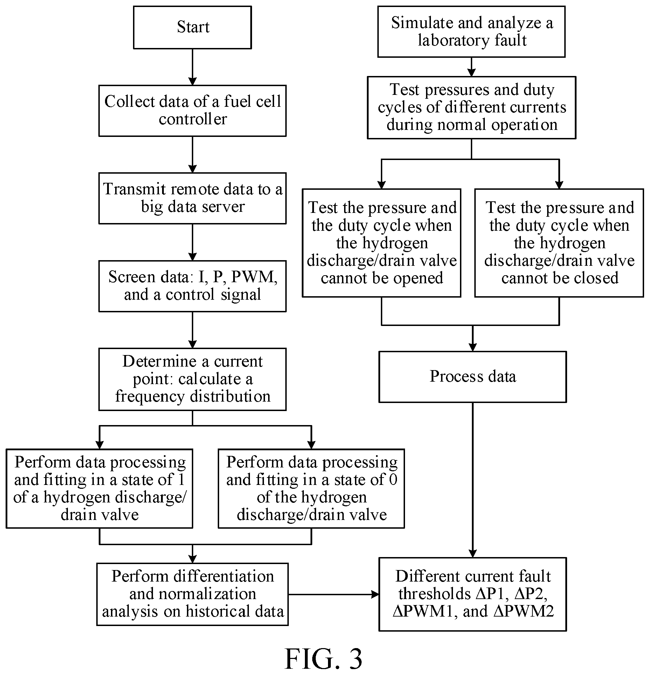

In step III and step IV described above, a plurality of thresholds appear, including the set pressure threshold △P1 and the set duty cycle threshold △PWM1 that correspond to the hydrogen discharge valve, and the set pressure threshold △P2 and the set duty cycle threshold △PWM2 that correspond to the drain valve. The four thresholds may generally be determined in two manners. One manner is obtaining the thresholds by using a laboratory simulation fault test, and the other is calculating the thresholds by using historical data, as shown in FIG. 3. A description is given below by using the set pressure threshold △P1 of the hydrogen discharge valve as an example. The set duty cycle threshold △PWM1 of the hydrogen discharge valve and the set pressure threshold △P2 and the set duty cycle threshold △PWM2 of the drain valve have the same principle. Details are not described herein again.

Manner 1: Construct, in a laboratory, a faulty environment that simulates a fault in which the hydrogen discharge valve cannot be opened and a normal environment in which the hydrogen discharge valve normally operates, place a fuel cell system to operate in the faulty environment and the normal environment respectively, obtain the maximum hydrogen gas inlet pressure value data respectively from the two environments (a plurality of experiments may be conducted in a faulty environment) when the operating current of the fuel cell is the fault determination current I, perform, in chronological order, numerical fitting on all of the maximum hydrogen gas inlet pressure values obtained from the two environments, and use a difference between numerical values generated through fitting in the two environments as the set pressure threshold △P1. When pluralities of experiments are conducted in the faulty environment, a numerical value may be generated from each experiment through fitting. An average of numerical values generated through fitting a plurality of times is used as a value simulated in the faulty environment.

Manner 2: Obtain the maximum hydrogen gas inlet pressure value data under a condition that a fault in which the hydrogen discharge valve cannot be opened occurs and a condition that the hydrogen discharge valve is normal when the operating current of the fuel cell is a fault determination current I in a historical operation process, perform, in the chronological order, numerical fitting on all of the maximum hydrogen gas inlet pressure values obtained in the two conditions , and use a difference between numerical values generated through fitting in the two conditions as the set duty cycle threshold. A plurality of sets of data may exist in the condition of the fault in which the hydrogen discharge valve cannot be opened. A piece of data may be generated from each set of data through fitting. An average of numerical values generated through fitting a plurality of times is used as a value generated through fitting under a condition that the fault in which the hydrogen discharge valve cannot be opened occurs. A plurality of sets of data may exist under a condition that the hydrogen discharge valve is normal. A piece of data may be generated from each set of data through fitting. An average of numerical values generated through fitting a plurality of times is used as a value generated through fitting under the condition that the hydrogen discharge valve is normal.

Based on the above, the present invention has the following features:
1) In view of a problem that the valve in the fuel cell system has no opening/closing state feedback due to usage of the form of a solenoid valve, a phenomenon caused when the valve cannot be opened/closed is analyzed in the present invention. Therefore, it is concluded that an excessively high hydrogen gas inlet pressure is caused when the valve cannot be opened, and an excessively large duty cycle of the pressure control apparatus is caused when the valve cannot be closed. The hydrogen gas inlet pressure of the fuel cell system and the duty cycle of the pressure control apparatus are detected by using the conclusion, to determine whether the valve fails, thereby providing an effective and feasible diagnostic method for fault detection of the hydrogen discharge valve and the drain valve.
2) Data processing and analysis are performed by relying on a big data platform, so that fault identification is more effective and reliable, to avoid affecting the customer experience due to frequent on and off of a system caused by erroneous determination on a fault of a fuel cell controller.
3) A fault reminder function is provided, and fault information of the hydrogen discharge valve and the drain valve may be transmitted to a customer and the after-sales technician to facilitate maintenance.

### Apparatus embodiment:

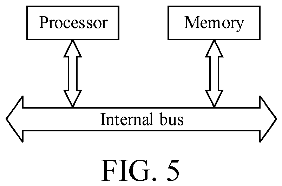

An embodiment of a hydrogen discharge valve/drain valve fault diagnosis apparatus of the present invention has a structure shown in FIG. 5, and includes a memory, a processor, and an internal bus, and communication and data interaction between the processor and the memory are completed through the internal bus. The memory includes at least one software function module stored in the memory, and the processor executes various functional applications and data processing by running a software program and modules stored in the memory, thereby implementing the hydrogen discharge valve/drain valve fault diagnosis method introduced in the method embodiment of the present invention.

The processor may be a processing apparatus such as a microprocessor MCU and a programmable logic device FPGA. The memory may be various memories such as a RAM and a ROM that store information by using electric energy, or may be various memories such as a hard disk, a floppy disk, a magnetic tape, a magnetic core memory, a bubble memory, and a USB flash drive that store information by using magnetic energy, may also be various memories such as a CD and a DVD that store information by optical means, and certainly, may also be memories such as a quantum memory and a graphene memory that store information in other manners.

### Embodiment of a fuel cell vehicle:

An embodiment of a fuel cell vehicle of the present invention includes a vehicle control unit (VCU) and a hydrogen fuel cell system. The hydrogen fuel cell system includes a fuel cell controller, a fuel cell, and various fuel cell accessories. The fuel cell accessories include a hydrogen discharge valve, a drain valve, a pressure sensor for detecting a hydrogen gas inlet pressure, and a pressure control apparatus. The hydrogen discharge valve and the drain valve are respectively configured to discharge nitrogen in hydrogen gas and liquid water in a water separator. The pressure control apparatus is configured to control injection of hydrogen through a front end port of a hydrogen storage chamber to maintain a hydrogen pressure in the chamber constant. The fuel cell controller includes a memory and a processor. The memory of the fuel cell controller stores various computer program instructions. The VCU includes a memory and a processor. The memory of the VCU also stores various computer program instructions.

A hydrogen discharge valve/drain valve fault diagnosis method of the present invention may be implemented in the following two manners:

In a first manner, the fuel cell controller is connected to a pressure sensor and the pressure control apparatus through a line, to obtain information detected by the pressure sensor and a duty cycle of the pressure control apparatus. A computer program instruction in a memory of the fuel cell controller includes a computer program instruction for implementing the hydrogen discharge valve/drain valve fault diagnosis method of the present invention. The processor of the fuel cell controller executes the computer program instruction stored in the memory of the fuel cell controller to implement the method of the present invention and implement, based on the information detected by the pressure sensor and the duty cycle of the pressure control apparatus, the hydrogen discharge valve/drain valve fault diagnosis method described in the method embodiment of the present invention.

In a second manner, the VCU is connected to the pressure sensor and the pressure control apparatus through a line, to obtain information detected by the pressure sensor and a duty cycle of the pressure control apparatus. A computer program instruction in a memory of the VCU includes a computer program instruction for implementing the hydrogen discharge valve/drain valve fault diagnosis method of the present invention. The processor of the VCU executes the computer program instruction stored in the memory of the VCU to implement the method of the present invention and implement, based on the information detected by the pressure sensor and the duty cycle of the pressure control apparatus, the hydrogen discharge valve/drain valve fault diagnosis method described in the method embodiment of the present invention.

## Claims

1. A hydrogen discharge valve/drain valve fault diagnosis method, comprising a diagnostic method for a fault in which the valve cannot be opened and/or a diagnostic method for a fault in which the valve cannot be closed, wherein the valve is a hydrogen discharge valve or a drain valve; and
the diagnostic method for a fault in which the valve cannot be opened comprises the following steps:
1a) obtaining maximum hydrogen gas inlet pressure value data generated when an operating current of a fuel cell is a fault determination current and a valve control state is controlled open within a period of time in which a check needs to be performed, wherein the maximum hydrogen gas inlet pressure value data comprises a maximum hydrogen gas inlet pressure value in a process of controlling the valve to open each time;
1b) performing curve fitting on all of the obtained maximum hydrogen gas inlet pressure values in chronological order, to obtain a pressure fitting curve corresponding to the valve; and
1c) determining that the fault in which the valve cannot be opened occurs if pressure fitting values within a period of time in the pressure fitting curve are continuously greater than a normal pressure value corresponding to the valve by a set pressure threshold; and
the diagnostic method for a fault in which the valve cannot be closed comprises the following steps:
2a) obtaining duty cycle data of a pressure control apparatus and discrete value data of a hydrogen gas inlet pressure generated when the operating current of the fuel cell is the fault determination current and the valve control state is controlled closed within the period of time in which a check needs to be performed, wherein the duty cycle data comprises a duty cycle in a process of controlling the valve to close each time, and the discrete value data of the hydrogen gas inlet pressure comprises a discrete value of the hydrogen gas inlet pressure in the process of controlling the valve to close each time;
2b) excluding data whose value deviation between a hydrogen gas inlet pressure value and a corresponding set pressure value is greater than a set deviation value, and performing curve fitting on all duty cycles of the remaining data in the chronological order, to obtain a duty cycle fitting curve corresponding to the valve; and
2c) determining that the fault in which the valve cannot be closed occurs if duty cycle fitting values within a period of time in the duty cycle fitting curve are continuously greater than a normal value of the duty cycle by a set duty cycle threshold.

2. The hydrogen discharge valve/drain valve fault diagnosis method according to claim 1, wherein in step 1c), the normal pressure value is obtained by using the following method:
obtaining the pressure fitting values within a set initial period of time in the pressure fitting curve, and determining the normal pressure value based on the pressure fitting values within the set initial period of time.

3. The hydrogen discharge valve/drain valve fault diagnosis method according to claim 1, wherein in step 2c), the normal value of the duty cycle is obtained by using the following method: obtaining duty cycle fitting values within a set initial period of time in the duty cycle fitting curve, and determining the normal value of the duty cycle based on the duty cycle fitting values within the set initial period of time.

4. The hydrogen discharge valve/drain valve fault diagnosis method according to claim 1, wherein the set pressure threshold and the set duty cycle threshold are respectively obtained by using the following method:
constructing a faulty environment that simulates the fault in which the valve cannot be opened and a normal environment in which the valve normally operates, placing a fuel cell system to operate in the faulty environment and the normal environment respectively, obtaining the maximum hydrogen gas inlet pressure value data respectively from the two environments when the operating current of the fuel cell is the fault determination current, respectively performing, in chronological order, numerical fitting on all of the maximum hydrogen gas inlet pressure values obtained from the two environments, and using a difference between numerical values generated through fitting in the two environments as the set pressure threshold; and
constructing a faulty environment that simulates the fault in which the valve cannot be closed and a normal environment in which the valve normally operates, placing a fuel cell system to operate in the faulty environment and the normal environment respectively, obtaining the duty cycle data of the pressure control apparatus respectively from the two environments when the operating current of the fuel cell is the fault determination current, respectively performing, in the chronological order, numerical fitting on all of the duty cycles obtained from the two environments, and using the difference between numerical values generated through fitting in the two environments as the set duty cycle threshold.

5. The hydrogen discharge valve/drain valve fault diagnosis method according to claim 1, wherein the set pressure threshold and the set duty cycle threshold are respectively obtained by using the following method:
obtaining the maximum hydrogen gas inlet pressure value data under a condition that the fault in which the valve cannot be opened occurs and a condition that the valve is normal when the operating current of the fuel cell is the fault determination current in a historical operation process, performing, in the chronological order, numerical fitting on all of the maximum hydrogen gas inlet pressure values obtained in the two conditions , and using a difference between numerical values generated through fitting in the two conditions as the set pressure threshold; and
obtaining the duty cycle data of the pressure control apparatus under a condition that the fault in which the valve cannot be closed occurs and a condition that the valve is normal respectively when the operating current of the fuel cell is the fault determination current in a historical operation process, performing, in the chronological order, numerical fitting on all of the duty cycles obtained in the two conditions , and using a difference between numerical values generated through fitting in the two conditions as the set duty cycle threshold.

6. The hydrogen discharge valve/drain valve fault diagnosis method according to any of claims 1 to 5, wherein the fault determination current is obtained by using the following method: calculating a frequency distribution of all of the operating currents of the fuel cell, and obtaining, as the fault determination current, the operating current having a maximum frequency.

7. The hydrogen discharge valve/drain valve fault diagnosis method according to claim 1, wherein a fuel cell system is controlled to shut down when it is determined that the fault in which the valve cannot be opened or closed occurs.

8. A hydrogen discharge valve/drain valve fault diagnosis apparatus, comprising a memory and a processor, wherein the processor is configured to execute instructions stored in the memory to implement the hydrogen discharge valve/drain valve fault diagnosis method according to any of claims 1 to 7.

9. A fuel cell vehicle, comprising a hydrogen fuel cell system, wherein the hydrogen fuel cell system comprises a hydrogen fuel cell, a pressure sensor for detecting a hydrogen gas inlet pressure, and a pressure control apparatus, wherein the pressure control apparatus is configured to maintain a constant pressure in a hydrogen storage chamber by changing a duty cycle, and further comprises a memory and a processor, wherein the processor is configured to execute instructions stored in the memory to implement the hydrogen discharge valve/drain valve fault diagnosis method according to any of claims 1 to 7.
